(19) Europäisches Patentamt
European Patent Office
Office européen des brevets

(11) EP 1 153 001 B1

(12) # FASCICULE DE BREVET EUROPEEN

(45) Date de publication et mention de la délivrance du brevet:
**02.01.2003 Bulletin 2003/01**

(21) Numéro de dépôt: **00901176.8**

(22) Date de dépôt: **25.01.2000**

(51) Int Cl.[7]: **C04B 41/52**, C03C 17/42, B01J 35/00, B05D 7/00

(86) Numéro de dépôt international:
**PCT/FR00/00165**

(87) Numéro de publication internationale:
**WO 00/044687 (03.08.2000 Gazette 2000/31)**

(54) **PROCEDE DE TRAITEMENT D'UN SUBSTRAT PAR DES PARTICULES PHOTOCATALYTIQUES DE MANIERE A RENDRE LEDIT SUBSTRAT AUTONETTOYANT**

VERFAHREN ZUM AUFBRINGEN EINER SELBSTREINIGENDEN BESCHICHTUNG AUS PHOTOKATALYTISCHEN TEILCHEN AUF EIN SUBSTRAT

METHOD FOR TREATING A SUBSTRATE WITH PHOTOCATALYTIC PARTICLES SO AS TO MAKE SAID SUBSTRATE SELF-CLEANING

(84) Etats contractants désignés:
**AT BE CH CY DE DK ES FI FR GB GR IE IT LI LU MC NL PT SE**

(30) Priorité: **26.01.1999 FR 9900837**

(43) Date de publication de la demande:
**14.11.2001 Bulletin 2001/46**

(73) Titulaire: **RHODIA CHIMIE**
**92408 Courbevoie Cédex (FR)**

(72) Inventeurs:
- **CHAUFFRIAT, Henri**
**F-69005 Lyon (FR)**
- **ROCHER, Laurent**
**F-69560 Saint Romain en Gal (FR)**

(74) Mandataire: **Seugnet, Jean Louis**
**Rhodia Services,**
**Direction de la Propriété Industrielle,**
**40, rue de la Haie-Coq**
**93306 Aubervilliers Cedex (FR)**

(56) Documents cités:
**EP-A- 0 857 770** **EP-A- 0 882 686**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 153 001 B1

Printed by Jouve, 75001 PARIS (FR)

## Description

La présente invention concerne un procédé de traitement de substrats par des particules de dioxyde de titane.

Il est connu que le dioxyde de titane permet, de par son activité photocatalytique, la dégradation de molécules organiques ou bioorganiques.

Si ce dioxyde de titane photocatalytique est déposé sur un support, la surface de ce support devient oxydante et les salissures - notamment organiques - qui s'y déposent sont détruites par photooxydation. La surface est dite autonettoyante.

Le dépôt de dioxyde de titane à la surface du substrat peut être réalisé à partir de dispersions de particules de dioxyde de titane. De préférence, on utilise des dispersions de particules présentant une faible taille, notamment nanoparticulaire, de manière à obtenir des surfaces translucides, contrairement au dioxyde de titane micrométrique qui donne des surfaces blanches.

Les surfaces traitées peuvent être du verre, des plastiques, des matériaux de construction (mortiers, bétons, terres cuites), des céramiques, des pierres, du papier ou du bois.

Le dépôt de dioxyde de titane sur ces supports doit fortement adhéré au support pour que les surfaces traitées puissent être mises en place et afin qu'elles conservent dans le temps leurs propriétés autonettoyantes. Il faut également que le liant qui permet aux particules d'adhérer au support ne soit pas sensible à la photocatalyse des particules de dioxyde de titane.

Dans ce but, plusieurs procédés ont été mis en oeuvre proposant différents types de liants permettant de coller les particules au substrat.

Un premier procédé consiste à déposer sur le substrat à chaud des dispersions de particules de dioxyde de titane contenant le précurseur d'un liant. Par exemple, il a été proposé d'utiliser des dispersions de particules de dioxyde de titane et de liants organométalliques types titanates ou silicates. Les particules se trouvent alors prises dans un film de silice ou de dioxyde de titane (ce principe est décrit par exemple dans WO 97/10185). Ce liant minéral présente l'intérêt de ne pas être photodégradable.

Un deuxième procédé consiste à déposer sur le substrat à froid des dispersions de particules de dioxyde de titane contenant un liant organique. Un problème est que ce liant ne doit pas se dégrader sous l'effet des propriétés photocatalytiques des particules de dioxyde de titane. Pour cela, il a été proposé, par exemple, de choisir le liant parmi les silicones.

Cependant, bien que les liants silicones proposés ne se dégradent pas au contact des particules photocatalytiques, on observe qu'ils ne conduisent pas toujours à un revêtement homogène, dur et adhérent : bien souvent, les revêtements obtenus peuvent être éliminés par simple frottement avec le doigt.

Un but de la présente invention est donc de proposer un procédé de dépôt des dispersions de particules de dioxyde de titane pour former à froid des revêtements photocatalytiques à la surface de substrat.

Un autre but de la présente invention est de proposer un tel procédé conduisant à des revêtements homogènes, durs et adhérents.

Dans ces buts, l'invention concerne un procédé de traitement de la surface d'un substrat dans lequel on met en oeuvre les étapes suivantes :

1. on traite le substrat par une dispersion de particules photocatalytique, puis

2. on traite le substrat par au moins un composé siliconé choisi parmi :

**(a) les siliconates** de formule (I) :

$$R\text{- }Si\,(OM)_m(OH)_{3-m} \qquad (I)$$

dans laquelle :

- R est un reste hydrocarboné de 1 à 18 atomes de carbone, éventuellement substitué par un atome d'halogène, un groupe amino, éther, ester, époxy, mercapto,cyano ou (poly)glycol,
- m est un nombre entier ou fractionnaire compris entre 0,1 et 3,
- M est un métal alcalin, un groupe amonium ou un groupe phosphonium,

et/ou les produits de condensation desdits siliconates,

⇒ **(b)** les polyorganosiloxanes

- soit de formule moyenne (II) : $M_{\alpha}D_{\beta}Q_{\delta}(O_{1/2}R^{i})_{\varepsilon}$, dans laquelle :

  - ♦ $M = R^{ii}{}_3SiO_{1/2}$
    $D = R^{ii}{}_2SiO_{2/2}$
    $Q = SiO_{4/2}$
    avec $R^{ii}$, identique ou différent, représentant soit un radical alkyle linéaire ou ramifié ayant de 1 à 8 atomes de carbone, soit un groupe aryle substitué ou non ayant de 6 à 12 atomes de carbone, soit un groupe aralkyle, alkaryle, aryloxyalkyle ou alcoxyaryle dans lequel le groupe aryle comprend de 6 à 12 atomes de carbone qui peuvent éventuellement être substitués par au moins un groupe alkyle ou alkoxy, linéaire ou ramifié, ayant de 1 à 4 atomes de carbone, et dans lequel le groupe alkyle ou alkoxy a de 1 à 4 atome de carbone et est linéaire ou ramifié,
  - ♦ $\alpha$, $\beta$ et $\delta$ représentent respectivement les fractions molaires des atomes de silicium des motifs M, D et Q, avec $\alpha + \beta + \delta = 1$, et :

    $\alpha \leq 0,10$, de préférence $\alpha \leq 0,010$,
    $\beta \leq 0,85$,
    $\delta \geq 0,10$,

  - ♦ $R^{i}$, identiques ou différents, représentent un groupe alkyle ayant de 1 à 4 atomes de carbone,
  - ♦ $\varepsilon$ représentant le nombre moyen de motifs $O_{1/2}R^{i}$ par atome de silicium est compris entre 0,1 et 1,5,

- soit de formule moyenne (III) : $M_{\alpha}D_{\beta}T_{\gamma}(O_{1/2}R^{i})_{\varepsilon}$, dans laquelle :

  - ♦ M, D, $R^{i}$ et $\varepsilon$ ont la signification ci-dessus, $T = R^{ii}SiO_{3/2}$, avec $R^{ii}$ de même signification que ci-dessus,
  - ♦ $\alpha$, $\beta$ et $\gamma$ représentent respectivement les fractions molaires des atomes de silicium des motifs M, D et T, avec $\alpha + \beta + \gamma = 1$, et :

    $\alpha \leq 0,20$, de préférence $\alpha \leq 0,010$,
    $\beta \leq 0,60$,
    $\gamma \geq 0,30$,

L'invention consiste donc à traiter successivement le substrat tout d'abord avec une dispersion de particules photocatalytiques, puis ensuite avec au moins un composé siliconé.
La dispersion de particules et le composé siliconé se présentent généralement sous forme liquide. Ils peuvent être déposés sur le substrat par toute méthode classique de dépôt telle que pinceau, rouleau, pistolet ou spray.
Après application de chacun des deux traitements, on laisse généralement le substrat sécher à température ambiante.
Le substrat peut être de nature variée : il peut s'agir, par exemple, de verre, de polymères (plastiques), de matériaux de construction tels que mortiers, bétons, terres cuites, de céramiques, de pierres, de bois, de métaux, de papier.
Selon l'invention, les particules photocatalytiques de la dispersion à déposer sur le substrat sont de préférence des particules de dioxyde de titane présentant une taille d'au plus 100 nm, notamment comprise entre 10 et 50 nm. Les diamètres sont mesurés par microscopie électronique par transmission (MET).
La nature de la phase cristalline est, de préférence, majoritairement la forme cristalline anatase. "Majoritairement" signifie que le taux d'anatase des particules de dioxyde de titane est supérieur à 50 % en masse. De préférence, les particules présentent un taux d'anatase supérieur à 80 %. Le taux de cristallisation et la nature de la phase cristalline sont mesurés par diffraction RX.
Il est préférable d'utiliser des particules de dioxyde de titane monodisperses afin d'obtenir des revêtements plus transparents. On entend par monodisperses des particules présentant un indice de dispersion d'au plus 0,5, de préférence d'au plus 0,3, l'indice de dispersion étant donné par la formule suivante :

$$I = \frac{\varnothing_{84} - \varnothing_{16}}{2\varnothing_{50}}$$

dans laquelle :

- $\varnothing_{84}$ est le diamètre des particules pour lequel 84 % en poids des particules ont un diamètre inférieur à $Ø_{84}$,
- $\varnothing_{16}$ est le diamètre des particules pour lequel 16 % en poids des particules ont un diamètre inférieur à $Ø_{16}$,
- $\varnothing_{50}$ est le diamètre moyen des particules.

Les diamètres utiles à la détermination de l'indice de dispersion sont mesurés par sédimentation centrifuge des particules de la dispersion, suivie par rayons X, à l'aide d'un appareil Brookhaven type XDC.

Les particules monodisperses de la dispersion sont, de préférence, issues d'un procédé de préparation dit en solution ou par voie humide (thermolyse, thermohydrolyse ou précipitation d'un sel de titane) par opposition aux procédés d'oxydation ou de pyrolyse haute température d'un sel de titane. Il peut s'agir par exemple de particules de dioxyde de titane obtenues par le procédé décrit dans la demande EP-A-0 335 773.

Il peut notamment s'agir du procédé de préparation qui consiste à hydrolyser au moins un composé du titane A en présence d'au moins un composé B choisi parmi :

(i) les acides qui présentent :

- soit un groupement carboxyle et au moins deux groupements hydroxyles et/ou aminés,
- soit au moins deux groupements carboxyles et au moins un groupement hydroxyle et/ou amine,

(ii) les acides phosphoriques organiques de formules suivantes :

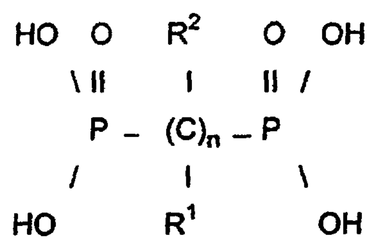

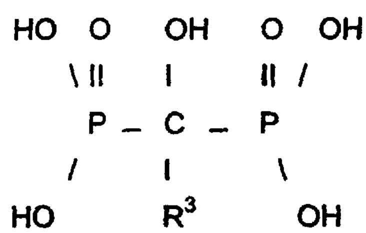

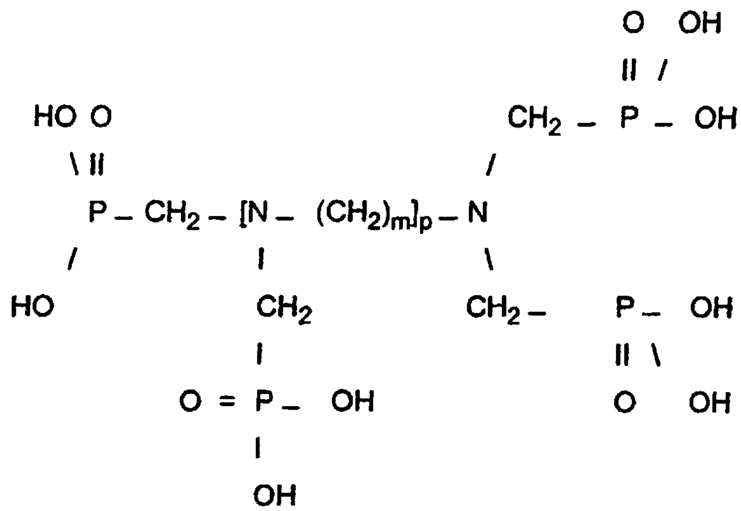

dans lesquelles, n et m sont des nombres entiers compris entre 1 et 6, p est un nombre entier compris entre 0 et 5, $R^1$, $R^2$, $R^3$ identiques ou différents représentant un groupement hydroxyle, amino, aralkyl, aryl, alkyl ou l'hydrogène,

(iii) les composés capables de libérer des ions sulfates en milieu acide,

(iv) les sels des acides décrits ci-dessus,

et en présence de germes de dioxyde de titane anatase présentant une taille d'au plus 5 nm et dans un rapport pondéral exprimé en $TiO_2$ présent dans les germes/titane présent avant introduction des germes dans le milieu d'hydrolyse, exprimé en $TiO_2$, compris entre 0,01 % et 3 %.

Ce procédé de préparation des particules comprend donc plusieurs étapes et, en premier lieu, une étape de préparation de la solution de départ comprenant un composé du titane A, un composé B tel que défini précédemment et des germes de dioxyde de titane.

Cette solution de départ, destinée à être hydrolysée, est de préférence totalement aqueuse ; éventuellement on peut ajouter un autre solvant, un alcool par exemple, à condition que le composé du titane A et le composé B utilisés soient alors substantiellement solubles dans ce mélange.

En ce qui concerne le composé du titane A, on utilise en général un composé choisi parmi les halogénures, les oxyhalogénures, les alcoxydes de titane, les sulfates et plus particulièrement les sulfates synthétiques.

On entend par sulfates synthétiques des solutions de sulfates de titanyle réalisées par échange d'ions à partir de solutions de chlorure de titane très pures ou par réaction d'acide sulfurique sur un alcoxyde de titane.

De préférence, on opère avec des composés du titane du type halogénure ou oxyhalogénure de titane. Les halogénures ou les oxyhalogénures de titane plus particulièrement utilisés dans la présente invention sont les fluorures, les chlorures, les bromures et les iodures (respectivement les oxyfluorures, les oxychlorures, les oxybromures et les oxyiodures) de titane.

Selon un mode particulièrement préféré, le composé du titane est l'oxychlorure de titane $TiOCl_2$.

La quantité de composé de titane A présente dans la solution à hydrolyser n'est pas critique.

La solution initiale contient en outre au moins un composé B tel que défini précédemment. A titre d'exemples non limitatifs de composés B entrant dans le cadre de la présente invention, on peut citer notamment :

- les acides hydroxypolycarboxyliques, et plus particulièrement les acides hydroxydi- ou hydroxytricarboxyliques tels que l'acide citrique, l'acide maléique et l'acide tartrique.
- les acides (polyhydroxy)monocarboxyliques, comme par exemple, l'addeglucoheptonique et l'acide gluconique,
- les acides poly(hydroxycarboxyliques), comme par exemple l'acide tartrique,
- les monoacides dicarboxyliques et leurs amides correspondantes, comme par exemple l'acide aspartique, l'asparagine et l'acide glutamique,
- les aminoacides monocarboxyliques, hydroxylés ou non, comme par exemple la lysine, la sérine et la thréonine,

  - l'aminotriphosphonate de méthylène, l'éthylènediaminotétraphosphonate de méthylène, le triéthylénetétraaminohexaphosphonate de méthylène, le tétraéthylènepentaaminoheptaphosphonate de méthylène, le pentaéthylènehexaaminooctaphosphonate de méthylène,

- le diphosphonate de méthylène; de 1,1' éthylène; de 1,2 éthylène; de 1,1' propylène; de 1,3 propylène; de 1,6 hexaméthylène; le 2,4 dihydroxypentaméthylène - 2,4 diphosphonate; le 2,5 dihydroxyhexaméthylène - 2,5 disphosphonate ; le 2,3 dihydroxybutylène - 2,3 diphosphonate ; le 1 hydroxybenzyle - 1,1' diphosphonate ; le 1 aminoéthylène 1-1, diphosphonate ; l'hydroxyméthylène diphosphonate ; le 1 hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphosphonate.

Comme déjà indiqué, il est également possible d'utiliser à titre de composé B tous les sets des acides précités. En particulier, ces sels sont soit des sels alcalins, et plus particulièrement des sels de sodium, soit des sels d'ammonium.

Ces composés peuvent être choisis aussi parmi l'acide sulfurique et les sulfates d'ammonium, de potassium.

De préférence, les composés B tels que définis ci-dessus sont des composés hydrocarbonés de type aliphatique. Dans ce cas, la longueur de la chaîne principale hydrocarbonée n'excède pas, de préférence, 15 atomes de carbone, et plus préférentiellement 10 atomes de carbone.

La quantité de composé B n'est pas critique. D'une manière générale, la concentration molaire du composé B par rapport à celle du composé du titane A est comprise entre 0,2 et 10 % et de préférence entre 1 et 5 %.

Enfin la solution de départ comprend des germes de dioxyde de titane utilisés d'une manière spécifique.

Tout d'abord, les germes de dioxyde de titane utilisés doivent présenter une taille d'au plus 5 nm, mesurée par diffraction X. De préférence, on utilise des germes de dioxyde de titane présentant une taille comprise entre 3 et 5 nm.

Ensuite, le rapport pondéral du dioxyde de titane présent dans les germes sur le titane présent dans le milieu d'hydrolyse avant introduction des germes (c'est-à-dire apporté par le composé du titane A), et exprimé en $TiO_2$, est compris entre 0,01 et 3 %. Ce rapport peut être préférentiellement compris entre 0,05 et 1,5 %. La réunion de ces deux conditions sur les germes (taille et rapport pondéral) associée au procédé tel que décrit précédemment permet de contrôler précisément la taille finale des particules de dioxyde de titane en associant à un taux de germes une taille de particule. On peut ainsi obtenir des particules dont la taille varie entre 5 et 100 nm.

On utilise des germes de dioxyde de titane sous forme anatase de manière à induire la précipitation du dioxyde de titane sous forme anatase. Généralement, du fait de leur petite taille, ces germes se présentent plutôt sous la forme d'anatase mal cristallisé. Les germes se présentent habituellement sous la forme d'une suspension aqueuse constituée de dioxyde de titane. Ils peuvent être obtenus de manière connue par un procédé de neutralisation d'un sel de titane par une base.

L'étape suivante consiste à réaliser l'hydrolyse de cette solution de départ par tout moyen connu de l'homme du métier et en général par chauffage. Dans ce dernier cas, l'hydrolyse peut de préférence être effectuée à une température supérieure ou égale à 70°C. On peut aussi travailler dans un premier temps à une température inférieure à la température d'ébullition du milieu puis maintenir le milieu d'hydrolyse en palier à la température d'ébullition.

Une fois l'hydrolyse réalisée, les particules de dioxyde de titane obtenues sont récupérées par séparation du solide précipité des eaux mères. Puis, elles sont redispersées dans un milieu liquide aqueux de manière à obtenir une dispersion de dioxyde de titane. Ce milieu liquide peut être acide ou basique.

Il a été observé que les particules de dioxyde de titane issues d'un procédé de préparation dit en solution ou par voie humide, et notamment issues du procédé décrit ci-dessus avec hydrolyse à température d'environ 100 °C, présentent, de par leur porosité, un indice de réfraction plus faible que les particules de dioxyde de titane issues d'autres procédés. Cette propriété présente un grand intérêt lorsque les particules sont utilisées pour préparer un revêtement sur un substrat en verre, car le revêtement obtenu présente également un faible indice de réfraction. Cet avantage optique est important car une couche de fort indice de dioxyde de titane conduit à augmenter la réflexion lumineuse du verre porteur, donc à diminuer sa transmission lumineuse. Or, pour certaines applications, notamment dans le domaine des vitrages équipant des véhicules, il est indispensable d'avoir des niveaux de transmission lumineuse élevés (pour un pare-brise, une transmission lumineuse minimale de 75 % est nécessaire). De préférence, les particules de la dispersion présentent une surface spécifique BET d'au moins 70 $m^2$/g.

On entend par surface spécifique BET, la surface spécifique déterminée par adsorption d'azote conformément à la norme ASTMD 3663-78 établie à partir de la méthode BRUNAUER - EMMETT - TELLER décrite dans le périodique "The Journal of the American Society", 60, 309 (1938). Pour mesurer la surface spécifique des particules selon l'invention, lorsqu'elles se présentent sous forme de dispersion, il est essentiel de suivre le protocole de mesure qui consiste à éliminer la phase liquide de la dispersion puis à sécher les particules sous vide à une température de 150°C pendant au moins 4 heures.

De préférence, les particules de la dispersion présentent également une densité de l'ordre de 2,4. Par "de l'ordre", on entend que la densité est de 2,4 ± 0,2. Une telle valeur de densité est faible par rapport à la densité classique

du dioxyde de titane anatase qui est de 3,8. Cette densité est évaluée par mesure des volumes poreux.

Ces caractéristiques de surface spécifique et de densité peuvent être obtenues pour les particules de dioxyde de titane issues d'un procédé de préparation dit en solution ou par voie humide, et notamment issues du procédé décrit ci-dessus avec hydrolyse à température d'environ 100 °C.

Les particules de dioxyde de titane peuvent également être obtenues commercialement. Elles peuvent se présenter sous diverses formes.

Il peut tout d'abord s'agir de dispersions aqueuses de particules de dioxyde de titane, comme celles commercialisées par RHODIA CHIMIE sous la dénomination S5-300 ou de dispersions obtenues selon le procédé décrit dans le brevet EP-A-0 335 773 tel que décrit précédemment. De préférence, on utilise des dispersions aqueuses basiques, car il a été observé que ces dernières conduisaient à des dispersions donnant des revêtements plus transparents que les dispersions aqueuses acides. Dans le cas de dépôt sur verre, cette différence peut être atténuée si on active le verre par NaOH avant le dépôt.

Il peut également s'agir de dispersions organiques de particules de dioxyde de titane. Celles-ci peuvent être préparées à partir de dispersions aqueuses de particules de dioxyde de titane, le transfert de phase étant, par exemple, réalisé selon l'une des méthodes suivantes :

- lavage à l'acétone ou au solvant désiré par centrifugation et redispersion dans le solvant organique,
- distillation azéotropique du mélange eau/solvant si l'eau et le solvant sont non miscibles et forment un azéotrope,
- évaporation de l'eau à l'évaporateur rotatif si le solvant est miscible à l'eau et bout à une température supérieure à celle de l'eau
- mélange d'une dispersion aqueuse avec un milieu organique comprenant un agent de transfert cationique, si les particules sont chargées négativement, ce dernier pouvant être choisi notamment parmi les amines quatemaires ou les sels d'ammonium quatemaire, ou un milieu comprenant un agent de transfert anionique, si les particules sont chargées positivement (ce procédé est plus particulièrement décrit dans le brevet GB-A-988.330).

On peut également utiliser des poudres de dioxyde de titane ; celles-ci doivent être mises en suspension pour les besoins du procédé selon la présente invention. De telles poudres sont disponibles commercialement, on peut citer les poudres G5 ou DT51D commercialisées par RHODIA CHIMIE. Des poudres peuvent également être obtenues par atomisation d'une dispersion aqueuse telle que décrite ci-dessus. De préférence, on utilise les particules déjà sous forme de dispersions, notamment lorsque l'on souhaite obtenir un traitement de surface transparent, les poudres conduisant généralement à des revêtements moins transparents.

Selon le procédé de l'invention, on dépose dans un deuxième temps le composé siliconé. Ce dernier peut être de nature variée.

Selon une **première variante**, il peut s'agir d'un siliconate de formule (I) et/ou des produits de condensation de ceux-ci. Les siliconates sont des sels de l'acide siliconique ou de ses dérivés.

Généralement, dans la formule (I), R est un reste hydrocarboné de 1 à 10 atomes de carbone et plus particulièrement de 1 à 6 atomes. De préférence, R est :

- un radical alkyle, par exemple : méthyle, éthyle, propyle, butyle, isobutyle,
- un radical alcényle, par exemple vinyle,
- un radical aryle, par exemple phényle ou naphtyle,
- un radical arylalkyle, par exemple, benzyle ou phénylethyle,
- un radical alkylaryle comme, par exemple, tolyle, xyxyle, ou
- un radical araryle comme biphénylyle.

Pour le métal M de la formule (I), on peut citer plus particulièrement le sodium ou le potassium ainsi que les groupe $N^+R'^4$, $P^+R'^4$ dans lesquels les groupements R' sont identiques ou différents et représentent des restes hydrocarbonés de 1 à 6 atome de carbone. Selon l'invention, on utilise plus particulièrement les siliconates alcalins. On peut aussi employer les siliconates alcalinoterreux.

De préférence, on utilise les siliconates de formule (I) pour lesquels :

- R est un radical vinyle ou phényle, et plus particulièrement les siliconates alcalins de ce type,
- les alkylsiliconates alcalins tels que les méthylsiliconates de sodium ou de potassium.

Ces siliconates alcalins ou alcalinoterreux peuvent être préparés, par exemple, par hydrolyse des silanes correspondants présentant trois groupes hydrolysables (tels que des atomes d'halogène, des radicaux alcoxy) suivie d'une dissolution du produit obtenu dans une solution d'une base inorganique forte dans des proportions telles qu'il y ait au moins un équivalent en base par atome de silicium (voir par exemple US A 2.441.422 et US A 2.441.423).

Ces produits sont généralement disponibles dans le commerce. Comme exemple de siliconates de ce type disponibles dans le commerce, on peut citer notamment le RHOXIMAT® Siliconate 51 T, commercialisé par la RHODIA CHIMIE, qui est un méthylsiliconate de potassium.

Selon cette première variante, il peut également s'agir de dérivés du siliconate. Par produits dérivés, on entend ici les produits de condensation des produits répondant notamment à la formule (I) décrit ci-dessus ou ceux résultant de la polymérisation au moins partielle en composés ou polymères siliconiques. On sait par exemple que les alkylsiliconates de métal alcalin peuvent être transformés en polyalkylsiloxanes, notamment par l'action de l'anhydride carbonique ou autre agent acidifiant.

Les siliconates (a) s'utilisent habituellement sous forme de solutions aqueuses.

Selon une **deuxième variante** du procédé, le composés siliconé est un polyorganosiloxane (b) soit de formule (II), soit de formule (III).

De préférence, le polyorganosiloxane (b) est de formule (II) ou (III) et $R^i$ est un groupement éthyl ou méthyl. En moyenne, le polyorganosiloxane peut également présenter des extrémités silanol ($R^i$ = H), lesdites extrémités ne représentant pas plus de 20 % de la totalité des extrémités.

Selon un premier mode, on utilise un polyorganosiloxane de formule (III) dans laquelle :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un méthyl,
- pour chaque motif D = $R^{ii}_2SiO_{2/2}$, un substituant $R^{ii}$ est un méthyl et l'autre substituant $R^{ii}$ est un octyl,
- $\alpha$ vaut au plus 0,05,
- $\beta$ vaut au plus 0,10,
- $\gamma$ vaut au moins 0,70,
- $\varepsilon$ est compris entre 0,2 et 1.

Selon un deuxième mode, on utilise un polyorganosiloxane de formule (III) dans laquelle :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un méthyl,
- pour chaque motif D = $R^{ii}_2SiO_{2/2}$ les deux substituants $R^{ii}$ sont des méthyl,
- $\alpha$ vaut au plus 0,05,
- $\beta$ vaut au plus 0,30,
- $\gamma$ vaut au moins 0,70,
- $\varepsilon$ est compris entre 0,2 et 1.

Selon un troisième mode, on utilise un polyorganosiloxane de formule (III) dans laquelle :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un propyl,
- pour chaque motif D = $R^{ii}_2SiO_{2/2}$, les deux substituants $R^{ii}$ sont des méthyl,
- $\alpha$ vaut au plus 0,05,
- $\beta$ vaut au plus 0,50,
- $\gamma$ vaut au moins 0,40,
- $\varepsilon$ est compris entre 0,3 et 0,6.

Ce dernier mode est préféré lorsque le substrat à traiter est alcalin (du point de vue du pH généré en présence d'eau). C'est le cas des matériaux de construction (par exemple mortiers, bétons) obtenus par le mélange de liant hydraulique (ciment), de matériau inerte (granulats), d'eau et éventuellement d'adjuvant.

Le polyorganosiloxane (b) peut être en solution dans une phase liquide. Cette phase liquide est de préférence un solvant organique, qui peut être choisi parmi les solvants des polymères silicones, comme par exemple le D4 (octaméthylcyclotétrasiloxane) ou d'autres siloxanes volatils, le white spirit, les alcools en $C_1$-$C_8$, les hydrocarbures aliphatiques ou aromatiques tels que le cyclohexane ou les alcanes. Le choix de la phase liquide se fait en fonction de sa compatibilité avec le polyorganosiloxane. On peut ainsi jouer sur la transparence du revêtement final.

Dans ce cas, un catalyseur de réticulation est préférentiellement ajouté au polyorganosiloxane (b). Ce catalyseur de réticulation peut être choisi parmi les composés organiques du titane ou de l'étain, notamment les titanates d'alkyle et le dicarboxylate de dialkyl-étain.

Selon une mise en oeuvre préférée de l'invention, le polyorganosiloxane (b) se présente sous la forme d'une émulsion en phase aqueuse. Cette émulsion aqueuse comprend préférentiellement:

- un polyorganosiloxane de formule (II) ou (III)
- le produit (Z) de la réaction entre :
  - (Za) au moins de l'ammoniac et/ou une aminé aromatique et/ou aliphatique polyfonctionnefle soluble dans l'eau contenant de 2 à 25 atomes de carbone,
  - (Zb) au moins un acide ou anhydride carboxylique contenant de 3 à 22 atomes,
- et au moins un tensioactif (Y) choisi parmi les classes suivantes :

(Ya) les agents tensioactifs non-ioniques choisis parmi :

(i) les alkylphénols polyoxyalkylénés dont le substituant alkyle est en $C_6$-$C_{12}$ et contenant de 5 à 25 motifs oxyalkylènes ;
(ii) les alcools aliphatiques en $C_8$-$C_{22}$ polyoxyalkylénés contenant de 1 à 25 motifs oxyalkylènes ;
(iii) les hydrocarbures terpéniques alcoxylés tels que les α- ou β- pinènes éthoxylés et/ou propoxylés, contenant de 1 à 30 motifs oxyéthylène et/ou oxypropylène ;
(iv) les produits résultant de la condensation de l'oxyde d'éthylène ou de l'oxyde de propylène avec le propylène glycol, l'éthylène glycol, de masse moléculaire en poids de l'ordre de 2000 à 10000 ;
(v) les produits résultant de la condensation de l'oxyde d'éthylène ou de l'oxyde de propylène avec l'éthylènediamine ;
(vi) les acides gras éthoxylés et/ou propoxylés en $C_8$-$C_{18}$ contenant de 5 à 25 motifs éthoxylés et/ou propoxylés ;
(vii) les amides gras éthoxylés contenant de 5 à 30 motifs ;
(viii) les aminés éthoxylées contenant de 5 à 30 motifs éthoxylés ;
(ix)- les amidoamines alcoxylées contenant de 1 à 50, de préférence de 1 à 25, tout particulièrement de 2 à 20 motifs oxyalkylène, de préférence oxyéthylène ;
(x) les tristyrylphénols éthoxylés ;

(Yb) les agents tensio-actifs anioniques choisis parmi :

(i) les alkylesters sulfonates de formule $R-CH(SO_3M)-COOR'$, où R représente un radical alkyle en $C_8$-$_{20}$, de préférence en $C_{10}$-$C_{16}$, R' représente un radical alkyle en $C_1$-$C_6$, de préférence en $C_1$-$C_3$ et M est un cation alcalin (sodium, potassium, lithium), un ammonium substitué ou non substitué (méthyl-, diméthyl-, triméthyl-, tetraméthylammonium. diméthylpiperidinium) ou un dérivé d'une alcanolamine (monoéthanolamine, diéthanolamine, triéthanotamine). On peut citer tout particulièrement les méthyl ester sulfonates dont le radical R est en $C_{14}$-$C_{16}$ ;
(ii) les alkylsulfates de formule $ROSO_3M$, où R représente un radical alkyle ou hydroxyalkyle en $C_5$-$C_{24}$, de préférence en $C_{10}$-$C_{18}$, M représente un atome d'hydrogène ou est de même définition qu'au paragraphe Ya(i),
(iii) les dérivés éthoxylénés (OE) et/ou propoxylénés (OP) des alkyisulfates définis au paragraphe e(ii), présentant en moyenne de 0,5 à 30 motifs, de préférence de 0,5 à 10 motifs OE et/ou OP ;
(iv) les alkylamides sulfatés de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un radical tel que défini au paragraphe Ya(i) ou un atome d'hydrogène,
(v) les dérivés éthoxylénés (OE) et/ou propoxylénés (OP) des alkylamides sulfatés définis au paragraphe e(iv), présentant en moyenne de 0,5 à 60 motifs OE et/ou OP ;
(vi) les sels d'acides gras saturés ou insaturés en $C_8$-$C_{24}$, de préférence en $C_{14}$-$C_{20}$, les alkylbenzène-sulfonates en $C_9$-$C_{20}$, les alkylsutfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates ; le cation étant un métal alcalin (sodium, potassium, lithium), un reste ammonium substitué ou non substitué (méthyl-, diméthyl-, triméthyl-, tetraméthylammonium, diméthylpiperidinium) ou dérivé d'une alcanolamine (monoéthanolamine, diéthanolamine, triéthanolamine);

(Yc) les agents tensio-actifs amphotères et zwitterioniques choisis parmi :

(i) les alkyldiméthylbétaïnes, les alkylamidopropyldiméthylbétaïnes, les alkyltriméthylsulfobétaïnes, les

produits de condensation d'acides gras et d'hydrolysats de protéines,
(ii) les alkylamphoacétates ou alkylamphodiacétates dont le groupe alkyle contient de 6 à 20 atomes de carbone,
(iii) les phosphoaminolipides tels la lécithine.

A titre d'exemples de produits commerciaux d'agents tensioactifs de type (Yb), on citera les produits SIPON® LCS 95 ou 98 de la société Sidobre Sinnova (laurisulfate de Sodium) et le NANSA® 1169A de la société Albright and Wilson (dodecylbenzenesulfonate de sodium).

A titre d'exemples de produits commerciaux d'agents tensioactifs (Yc), on citera les produits MIRANOL® C32 , MIRANOL® C2M de RHODIA CHIMIE (cocoamphoacétate), les produits ALKATERIC® 2CIB, CB, PB,CAB et LAB de RHODIA CHIMIE.

Les amines (Za) sont de l'ammoniac et/ou des amines primaires, secondaires ou tertiaires, éventuellement substituées, par exemple par un ou plusieurs groupes OH, ou des amines sous forme d'amides ou d'acides aminés.

De manière particulièrement préférée, il s'agit d'alcoolamine et notamment d'amines à groupement(s) alkyle (s) ayant de 1 à 5 atomes de carbone et substitués par au moins un OH, de préférence de 1 à 3. On peut citer notamment :

- l'amino méthylpropanol, par exemple : le 2-amino-2-méthylpropane-1-ol ;
- l'amino éthyt propane diol, par exemple ; le 2-amino-2-éthyfpropane-1,3-diol, qui est le préféré ;
- la triéthanolamine.

Il peut aussi s'agir de diamines, telles que hydrazine et hexaméthylènediamine, d'amines cycliques telles que la morpholine et la pyridine, d'acides aminés aromatiques et aliphatiques tels que l'acide 3-méthyl-4-aminobenzoïque, ou encore d'amides de formule (V) :

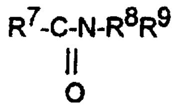

dans laquelle $R^7$, $R^8$ et $R^9$ peuvent représenter l'hydrogène ou des groupes alkyle ayant de 1 à 5 atomes de carbone, tels que le formamide, l'acétamide, le N-éthylacétamide et le N,N-diméthylbutyramide.

L'acide carboxylique (Zb) est préférentiellement un acide gras saturé ou insaturé, linéaire ou ramifié, en $C_3$-$C_{22}$, préférentiellement $C_{10}$-$C_{18}$, éventuellement substitué, par exemple par un groupe OH, comme notamment l'acide oléique, l'acide isostéarique, l'acide stéarique, l'acide ricinoléique et l'acide gras du tallöl.

L'émulsion aqueuse de polyorganosiloxane (b) peut comprendre en option au moins un agent de réticulation qui est un métal hydrosoluble. Les agents de réticulation préférés contiennent du zinc, de l'aluminium, du titane, du cuivre, du chrome, du fer, du zirconium et/ou du plomb. Les agents de réticulation peuvent être un sel ou un complexe d'un tel métal ou de tels métaux. Les sels peuvent être acides, basiques ou neutres. Les sels appropriés incluent les halides, les hydroxydes, les carbonates, les nitrates, les nitrites, les sulfates, les phosphates. Les agents de réticuiation particulièrement préférés dans le cadre de la présente invention sont les complexes du zirconium, par exemple ceux décrits dans la demande de brevet GB-A-1 002 103, qui sont des sels du radical zirconyl avec au moins deux acides monocarboxyliques, un groupe acide ayant de 1 à 4 atomes de carbone, l'autre ayant plus de 4 atomes de carbone, et pouvant être réalisé par un traitement à reflux de l'acide carboxylique de 1 à 4 atomes de carbone avec une pâte de carbonate de zirconyl, puis ajout de l'acide carboxylique ayant plus de 4 atomes de carbone. Des composés métalliques inorganiques hydrosolubles peuvent également être utilisés. Le carbonate de zirconium et d'ammonium est particulièrement préféré.

L'émulsion de polyorganosiloxane (b) peut également comprendre un composé métallique de durcissement. Ces composés sont essentiellement les sels d'acides carboxyliques, les titanates d'alkanolamines, les halogénures de métaux choisis parmi le plomb, le zinc, le zirconium, le titane, le fer, l'étain, le calcium et le manganèse. Les composés catalytiques à base d'étain, généralement un sel d'organoétain (par exemple les bischélates d'étain, les dicarboxylates de diorganoétain) conviennent.

De préférence, l'émulsion comprend un polyorganosiloxane de formule (III) dans laquelle :

- pour chaque motif M = $R^{ii}_3SiO_{1/2}$, $R^{ii}$ est un méthyl,
- pour chaque motif T = $R^{ii}SiO_{3/2}$, $R^{ii}$ est un propyl,
- pour chaque motif D = $R^{ii}_2SiO_{2/2}$, les deux substituants $R^{ii}$ sont des méthyl,
- $\alpha$ vaut au plus 0,05,

- β vaut au plus 0,50,
- γ vaut au moins 0,40,
- ε est compris entre 0,3 et 0,6,

ce qui correspond au troisième mode défini ci-dessus.

L'émulsion aqueuse de polyorganosiloxane comprend généralement de 10 à 60 % en poids de polyorganosiloxane, le restant étant en général le produit (Z), l'agent tensioactif (Y) et l'eau. La quantité de tensioactif (Y) au sein de l'émulsion est comprise généralement entre 0,1 et 15 % en poids et de préférence entre 0,25 et 2 % en poids par rapport au poids total de l'émulsion. La quantité du produit (Z) est comprise généralement entre 0,1 et 15 % en poids et de préférence 0,25 et 5 % en poids par rapport au poids total de l'émulsion.

Le produit (Z) peut être préparé par réaction de l'acide carboxylique (Zb) et de l'aminé (Za) dans l'eau, éventuellement à chaud (25°C à 75°C). Les composés (Za) et (Zb) sont avantageusement en quantités équimolaires ou proches de l'équimolarité, par exemple pouvant aller au moins jusqu'à 1,2 mole d'acide carboxylique, notamment stéarique, pour 1 mole d'aminé, notamment de 2-amino-2-éthylpropane-1,3-diol. De préférence, le métal, notamment le zirconium, de l'agent de réticulation est introduit selon les quantités suivantes : le rapport entre le nombre de mole de zirconium et le nombre de mole du produit (Z) est compris entre 0 et 2, de préférence entre 0,05 et 1. Il est préférable d'ajouter l'eau au mélange des composés (Za) et (Zb). De préférence, l'eau et les composés (Za) et (Zb) sont chauffés à une température de 70 à 75 °C, sous agitation douce. Dans le cas où on utilise un agent de réticulation, cet agent est ajouté ensuite sous agitation, de préférence après refroidissement entre 20 et 35°C.

L'émulsion peut être réalisée de différentes façons, par exemple par inversion de phase ou par la méthode directe qui consiste à couler le polyorganosiloxane dans le mélange du produit (Z) et le tensioactif (Y) et de l'eau sous cisaillement. Dans ces deux cas, on utilise les technologies classiques de mise en émulsion discontinue telles que les mélangeurs cisaillants, ou de mise en émulsion continue telles qu'un broyeur colloidal ou homogénéisateur à haute pression, par exemple, homogénéisateur *Manton Gaulin*. Au choix, le polyorganosiloxane peut être émulsifié avec le produit (Z), ou le tensioactif (Y), dans un premier temps, puis, on ajoute respectivement le tensioactif (Y), ou le produit (Z) selon le cas à l'émulsion déjà faite. On peut également préparer l'émulsion en présence simultanée du produit (Z) et du tensio-actif (Y). Il est à noter qu'au cas où l'acide carboxylique (Yb) utilisé est solide, par exemple l'acide stéarique, il convient de le fondre lors de son ajout dans la préparation de l'émulsion.

Selon le procédé de l'invention, il est également possible d'utiliser à titre de composé du silicone une émulsion aqueuse comprenant un mélange des composés siliconés (b) et **un silane** ou un oligomère de silane **(c)** de formule (IV):

$$(R')_u \, SiX_{(4-u)} \qquad (IV)$$

dans laquelle :

- le poids moléculaire du silane est inférieure à 700 g,
- R', identiques ou différents, sont des radicaux organiques monovalents, notamment alkyle ou alkényle linéaire ou ramifié en $C_1$ à $C_{30}$ éventuellement substitués par un groupement halogène (F, Cl, Br) un groupement époxydé, un groupement aminé,
- u est égal à 0, 1 ou 2,
- X, identiques ou différents, sont des groupes condensables et/ou hydrolysables organiques et représentent :

  . un groupe OH,
  . un groupe alcoxy ou alcényloxy contenant de 1 à 10 atomes de carbone (méthoxy, éthoxy, n-propoxy, isopropoxy),
  . un groupe aryloxy contenant de 6 à 13 atomes de carbone,
  . un groupe cétiminoxy contenant de 1 à 8 atomes de carbone,
  . un groupe amino-fonctionnel ou amido-fonctionnel contenant de 1 à 6 atomes de carbone, liés au silicium par une liaison Si-N.

De préférence, le poids moléculaire du silane ou de l'oligomère de silane est compris entre 100 et 500 g et dans la formule (IV):

- R', identiques ou différents, sont des radicaux organiques monovalents, notamment alkyle ou alkényle linéaire ou ramifié en $C_1$ à $C_{15}$ éventuellement substitués par un groupement halogène (F, Cl, Br) un groupement époxydé, un groupement aminé, ces groupements R' étant de préférence un groupement méthyle, vinyle et/ou octyle, et

- u est égal à 1 ou 0.

Cette émulsion aqueuse comprend préférentiellement :

- au moins un silane ou oligomère de silane de formule (IV),
- le produit (Z) de la réaction entre :
  - (Za) au moins de l'ammoniac et/ou une amine aromatique et/ou aliphatique polyfonctionnelle soluble dans l'eau contenant de 2 à 25 atomes de carbone,
  - (Zb) au moins un acide ou anhydride carboxylique contenant de 3 à 22 atomes.

Les aminés aromatiques et/ou aliphatiques, les acides ou anhydrides carboxyliques sont identiques à ceux définis précédemment dans le cadre de l'émulsion aqueuse de polyorganosiloxane.

Cette émulsion aqueuse de polyorganosiloxane et de silane ou d'oligomère de silane (c) peut également comprendre :

- au moins un agent tensioactif (Y) de type (Ya), (Yb) ou (Yc), et/ou
- au moins un agent de réticulation qui est un métal hydroluble, et/ou
- au moins un composé métallique de durcissement.

Ces composés sont identiques à ceux définis précédemment pour les émulsions aqueuses de polyorganosiloxanes.

Pour une description en détails des silanes, on peut se référer notamment aux documents US -A- 3 294 725 ; US-A-4 584 341 ; US-A-4 618 642 ; US-A-4 608 412 ; US-A-4 525 565 ; EP-A-387157 ; EP-A-340 120 ; EP-A-364 375 ; FR-A-1 248 826 ; et FR - 1 023477. Plus précisément, à titre d'exemples on peut citer les alcoxysilanes suivants: $Si(OC_2H_5)_4$ ; $CH_3Si(OCH_3)_3$ ; $CH_3Si(OC_2H_5)_3$ ; $(C_2H_5O)_3Si(OCH_3)$ ;$CH_2=CHSi(OCH_3)_3$ ; $CH_3(CH_2=CH)Si(OCH_3)_2$ ; $CH_2=CHSi(OC_2H_5)_3$ ; $CH_2=CHSi[ON=C(CH_3)C_2H_5]_3$; $CH_3Si[ON=C(CH_3)_2]_3$ ; $CH_3Si[-C(CH_3)=CH_2]_3$ ; $C_{10}H_{21}Si(OCH_3)_3$; le méthyltri(N-méthylacétamidosilane) ; le méthyltris(cyclohéxylaminosilane) ; $isoC_4H_9Si(OCH_3)_3$ ; $isoC_4H_9Si(OC_2H_5)_3$ ; $C_8H_{17}Si(OCH_3)_3$ ; $C_8H_{17}Si(OC_2H_5)_3$ ; $C_2H_5Si(OCH_3)_3$ ; $C_2H_5Si(OC_2H_5)_3$ ; $C_4H_9Si(OCH_3)_3$ ; $C_4H_9Si(OC_2H_5)_3$ et $(CH_3)_2Si(OCH_3)_2$.

Cette émulsion peut être réalisée :

- soit par mélange d'une émulsion aqueuse de polyorganosiloxane (b) de formule (II) ou (III), préférentiellement défini selon le troisième mode de la formule (III), et d'une émulsion aqueuse de silane ou d'oligomère de silane (c) de formule (IV),
- soit par mélange d'au moins un polyorganosiloxane (b) de formule (II) ou (III), préférentiellement défini selon le troisième mode de la formule (III), et d'au moins un silane ou oligomère de silane (c) de formule (IV), puis émulsification du mélange obtenu selon les procédés d'émulsification définis ci-dessus.

Dans tous les cas, l'émulsion comprend de préférence de 10 à 60 % en poids du mélange de polyorganosiloxane et du silane, le reste étant en général le produit de la réaction (Z), de l'eau et l'agent tensioactif (Y) si présent. Le rapport en poids polyorganosiloxane/silane est généralement compris entre 0 et 20 et de préférence entre 0,1 et 9. Les quantités du produit (Z) et de tensioactif (Y) sont telles que définies précédemment.

Le procédé selon l'invention présente l'avantage de mettre en oeuvre des produits de faible coût. Il permet en outre, dans certaines conditions d'utilisation, de conduire à des revêtements transparents ou translucides.

Si les composés silicones présentent des propriétés intrinsèques, telles que par exemple protection des substrats (hydrofugation), il a été observé que le fait de les utiliser selon le procédé de l'invention ne modifiait pas leurs propriétés car ils sont photorésistants

C'est le cas, par exemple, du revêtement mettant en oeuvre le polyorganosiloxane de formule (III), troisième mode préféré, qui permet d'obtenir un revêtement qui adhère fermement aux substrat alcalins et procure de plus une propriété d'hydrofugation propre à ce type de liant polyorganosiloxane.

Les exemples suivants illustrent l'invention sans toutefois en limiter la portée.

**EXEMPLES**

**EXEMPLE 1**

On utilise une dispersion aqueuse à 4 % en poids d'extrait sec de nanoparticules de dioxyde de référence

S5 300 B commercialisée par RHODIA CHIMIE. Son pH est de 10,8.

On utilise également un composé silicone qui est une émulsion aqueuse de polyorganosiloxane de formule (III), troisième mode : $D_{0,397}T_{0,603}(O_{1/2}R)_{0,381}$ avec $D = (CH_3)_2SiO_{2/2}$ et $T = C_3H_7SiO_{3/2}$. Ce polyorganosiloxane est émulsionné par le stéarate d'aminé (1 % en poids par rapport au polyorganosiloxane) et le Rhodasurf R.O.X. commerciattsé par RHODIA CHIMIE (0,5 %) [mélange de 2 tensioactifs : stéarate d'aminé (anionique) (Z) et non ionique (Rhodasurf ROX) (Yb)]. La composition de l'émulsion est la suivante :

| | |
|---|---|
| Amino 2 éthyl 2 propane diol 1,3 (AEPD) | 6 g |
| Acide stéarique | 14,05 g |
| Rhodasurf R.O.X (85 %) | 11,44 g |
| Polyorganosiloxane de viscosité = 50 $mm^2/s$ | 606 g |
| Eau déminéralisée | 1317,3 g |
| Masse totale | 1954,79 g |

L'émulsion est réalisée de la manière suivante :

- on préchauffe l'appareil Manton-Gaulin à l'eau chaude (50°C),
- on prépare la pré-émulsion dans un bêcher en inox de 3 l en chargeant l'AEPD + l'acide stéarique + le tensioactif ROX + le polyorganosiloxane,
- on mélange avec une hélice et on chauffe simultanément à 60 °C. Puis, on ajoute de l'eau goutte à goutte en utilisant une turbine jusqu'à inversion (élévation de viscosité et couleur blanche),
- l'inversion s'effectue après coulée de 210 ml d'eau. Après la coulée, on agite et cisaille pendant environ 10 mn.
- le reste d'eau est coulé. On obtient une émulsion de granulométrie 1,945 μm.
- on passe cette émulsion à l'homogénéisateur Manton Gaulin sous une pression de 200 bars (1 seul passage).

La granulométrie moyenne finale est de 0,684 μm, l'extrait sec (2 g à 120 °C pendant 1 heure) est de 29 %.

L'émulsion est diluée à 6 % en poids de polyorganosiloxane pour l'application.

Le substrat à traiter est une dalle de béton. On dépose tout d'abord au pinceau la solution de particules de dioxyde de titane à raison de 100 g de dispersion/$m^2$. On laisse ensuite sécher le béton 1 heure environ à 25°C.

Puis, on dépose au pinceau l'émulsion de polyorganosiloxane à raison de 100 g d'émulsion/$m^2$. On laisse ensuite le béton sécher 4 jours à 25°C.

Ce traitement est appelé traitement 1.

L'aspect du béton n'a pas été modifié par le traitement 1.

Mesure de l'activité photocatalytique

On tache le béton traité par de l'huile de vidange usagée type TOTAL ACTIVA 5000 par application de l'huile à raison de 30 g/$m^2$ sur toute la surface de la dalle. Puis, on soumet la dalle à une irradiation UV à l'aide d'une lampe UVA 340 qui émet un rayonnement de 295 à 340 nm (spectre solaire).

L'évolution de la dégradation de la tache est contrôlée à l'aide d'un spectrocolorimètre de type CS-3 CHROMA SENSOR de DATACOLOR. On mesure ainsi l'indice de clarté L (pour la couleur blanche L = 100 et pour la couleur noire L = 0).

Le graphe 1 représente l'évolution de DL en fonction du temps d'irradiation, DL représentant la différence entre l'indice de clarté du support initial traité non taché et l'indice de clarté du support taché au temps t. Plus DL tend vers 0, plus le support retrouve son aspect initial.

La référence correspond à un témoin non traité mais taché.

Les résultats sont donnés sur la figure 1 : on observe que la dégradation de la tache d'huile de vidange sous l'action photocatalytique des particules de titane commence après 800 heures d'exposition. Après 2400 heures d'exposition, la tache a pratiquement disparu en totalité par rapport au témoin non traité pour lequel la surface reste complètement tachée.

Mesure de l'activité hydrofugeante :

Les propriétés hydrofuges du substrat traité sont contrôlées par la mesure de la reprise d'eau au tube de Karsten (test APL H&B T222) pendant 2 jours. Les résultats apparaissent sur la figure 2.

On constate que l'absorption d'eau n'est que de 0,09 ml en 2 jours pour le béton traité alors que le témoin non traité absorbe 0,5 ml en 6 heures.

Le substrat traité selon l'invention est donc hydrofugé et autonettoyant.

## EXEMPLE 2

On utilise la même dispersion de particules de dioxyde de titane et la même émulsion de polyorganosiloxane que dans l'exemple 1.

Le substrat et les conditions de traitement du substrat sont les mêmes que dans l'exemple 1.

### Mesure de l'activité photocatalytique

On lave le béton par pulvérisation d'eau pendant 2 minutes de manière à simuler de la pluie. On tache le béton traité par de l'huile de vidange usagée type TOTAL ACTIVA 5000 par application de l'huile à raison de 30 g/$m^2$ sur toute la surface de la dalle. Puis, on soumet la dalle à une irradiation UV à l'aide d'une lampe UVA 340 qui émet un rayonnement de 295 à 340 nm (spectre solaire). Au bout de 900 heures d'irradiation, on soumet le support à une nouvelle simulation de pluie par pulvérisation d'eau pendant 2 minutes, puis on recommence l'irradiation UV.

Les résultats apparaissent sur la figure 3. On observe que le témoin non traité reste taché. On constate que la dégradation n'est pas perturbée par les cycles de lavage, les particules de dioxyde de titane sont donc bien fixées sur le substrat grâce à l'émulsion de résine polyorganosiloxane.

## EXEMPLES 3

On utilise une dispersion aqueuse de nanoparticules de dioxyde de titane de référence S5 300 B commercialisée par RHODIA CHIMIE à 5 % en poids d'extrait sec. Son pH est de 10,8.

On utilise également un composé siliconé commercialisé sous le nom RHOXIMAT® SILICONATE 51T qui est un methylsiliconate de potassium en solution aqueuse présentant initialement à 47 % en poids d'extrait sec et dilué à 5 % pour l'application.

Le substrat à traiter est un carreau de terre cuite. On dépose tout d'abord au pinceau la solution de particules de dioxyde de titane à raison de 100 g de dispersion /$m^2$. On laisse ensuite sécher le carreau 1 heure environ à 25°C.

Puis, on dépose au pinceau le méthylsiliconate de potassium à raison de 100 g de solution/$m^2$. On laisse ensuite le carreau sécher 4 jours à 25°C.

Ce traitement est appelé traitement 2.

L'aspect du support n'est pas modifié par ce traitement.

### Mesure de l'activité photocatalytique

On reprend le protocole de l'exemple 1. Les résultats apparaissent sur la figure 4.

On observe que la dégradation commence après 400 heures d'irradiation et que le support retrouve pratiquement son aspect initial après 800 heures.

### Mesure de l'activité hydrofugeante:

Les propriétés hydrofuges du substrat traité sont contrôlées par la mesure de la reprise d'eau au tube de Karsten (test APL H&B T222) pendant 2 jours. Les résultats apparaissent sur la figure 5.

On constate que l'absorption d'eau n'est que de 0,3 ml en 2 jours pour le béton traité alors que le témoin non traité absorbe en quelques minutes les 20 ml du tube de Karsten.

Le substrat traité selon l'invention est donc hydrofugé et autonettoyant.

## EXEMPLE 4

On utilise la même dispersion de particules de dioxyde de titane et la même solution de siliconate que dans l'exemple 3.

Le substrat et les conditions de traitement du substrat sont les mêmes que dans l'exemple 1.

### Mesure de l'activité photocatalytique

On lave le béton par pulvérisation d'eau pendant 2 minutes de manière à simuler de la pluie. On tache le

béton traité par de l'huile de vidange usagée type TOTAL ACTIVA 5000 par application de l'huile à raison de 30 g/$m^2$ sur toute la surface de la dalle. Puis, on soumet la dalle à une irradiation UV à l'aide d'une lampe UVA 340 qui émet un rayonnement de 295 à 340 nm (spectre solaire). Au bout de 900 heures d'irradiation, on soumet le support à une nouvelle simulation de pluie par pulvérisation d'eau pendant 2 minutes, puis on recommence l'irradiation UV.

Les résultats apparaissent sur la figure 6. On observe que le témoin non traité reste taché. On constate que la dégradation n'est pas perturbée par les cycles de lavage, les particules de dioxyde de titane sont donc bien fixées à la surface grâce au méthylsiliconate de potassium.

## Revendications

**1.** Procédé de traitement de la surface d'un substrat **caractérisé en ce que** l'on met en oeuvre les étapes suivantes :

1. on traite le substrat par une dispersion de particules photocatalytiques, puis

2. on traite le substrat par au moins un composé siliconé choisi parmi :

⇨ **(a) les siliconates** de formule (I):

$$R\text{- }Si\ (OM)_m(OH)_{3-m} \quad (I)$$

dans laquelle :

- R est un reste hydrocarboné de 1 à 18 atomes de carbone, éventuellement substitué par un atome d'halogène, un groupe amino, éther, ester, époxy, mercapto,cyano ou (poly)glycol,
- m est un nombre entier ou fractionnaire compris entre 0,1 et 3,
- M est un métal alcalin, un groupe amonium ou un groupe phosphonium,

et/ou les produits de condensation desdits siliconates,

⇨ **(b) les polyorganosiloxanes**

. soit de formule moyenne (II) : $M_\alpha D_\beta Q_\delta (O_{1/2}R^i)_\varepsilon$, dans laquelle :

♦ $M = R^{ii}_3SiO_{1/2}$
$D = R^{ii}_2SiO_{2/2}$
$Q = SiO_{4/2}$
avec $R^{ii}$, identique ou différent, représentant soit un radical alkyle linéaire ou ramifié ayant de 1 à 8 atomes de carbone, soit un groupe aryle substitué ou non ayant de 6 à 12 atomes de carbone, soit un groupe aralkyle, alkaryle, aryloxyalkyle ou alcoxyaryle dans lequel le groupe aryle comprend de 6 à 12 atomes de carbone qui peuvent éventuellement être substitués par au moins un groupe alkyle ou alkoxy, linéaire ou ramifié, ayant de 1 à 4 atomes de carbone, et dans lequel le groupe alkyle ou alkoxy a de 1 à 4 atome de carbone et est linéaire ou ramifié,

♦ $\alpha$, $\beta$ et $\delta$ représentent respectivement les fractions molaires des atomes de silicium des motifs M, D et Q, avec $\alpha + \beta + \delta = 1$, et :

$\alpha \leq 0,10$, de préférence $\alpha \leq 0,010$,
$\beta \leq 0,85$,
$\delta \geq 0,10$,

♦ $R^i$, identiques ou différents, représentent un groupe alkyle ayant de 1 à 4 atomes de carbone,

♦ $\varepsilon$ représentant le nombre moyen de motifs $O_{1/2}R^i$ par atome de silicium est compris entre 0,1 et 1,5,

. soit de formule moyenne (III) : $M_\alpha D_\beta T_\gamma (O_{1/2}R^i)_\varepsilon$, dans laquelle :

- M, D, $R^i$ et $\varepsilon$ ont la signification ci-dessus, T = $R^{ii}SiO_{3/2}$, avec $R^{ii}$ de même signification que ci-dessus.
- $\alpha$, $\beta$ et $\gamma$ représentent respectivement les fractions molaires des atomes de silicium des motifs M, D et T, avec $\alpha + \beta + \gamma = 1$, et:

$\alpha \leq 0{,}20$, de préférence $\alpha \leq 0{,}010$,
$\beta \leq 0{,}60$,
$\gamma \geq 0{,}30$.

**2.** Procédé selon la revendication 1 , **caractérisé en ce que** les particules photocatalytiques sont des particules de dioxyde de titane présentant une taille d'au plus 100 nm.

**3.** Procédé selon l'une quelconque des revendications 1 ou 2, **caractérisé en ce que** le polyorganosiloxane (b) est de formule (II) ou (III) et $R^i$ est un groupement éthyl ou méthyl.

**4.** Procédé selon l'une quelconque des revendications précédentes, **caractérisé en ce que** le polyorganosiloxane (b) est de formule (III) et :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un méthyl,
- pour chaque motif D = $R^{ii}_2SiO_{2/2}$, un substituant $R^{ii}$ est un méthyl et l'autre substituant $R^{ii}$ est un octyl,
- $\beta$ vaut au plus 0,10,
- $\gamma$ vaut au moins 0,70,
- $\varepsilon$ est compris entre 0,2 et 1.

**5.** Procédé selon l'une quelconque des revendications précédentes, **caractérisé en ce que** le polyorganosiloxane (b) est de formule (III) et :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un méthyl,
- pour chaque motif D = $R^{ii}_2SiO_{2/2}$, les deux substituants $R^{ii}$ sont des méthyl,
- $\beta$ vaut au plus 0,30,
- $\gamma$ vaut au moins 0,70,
- $\varepsilon$ est compris entre 0,2 et 1.

**6.** Procédé selon l'une quelconque des revendications précédentes, **caractérisé en ce que** le polyorganosiloxane (b) est de formule (III) et :

- pour chaque motif M = $R^{ii}_3SiO_{1/2}$, les trois substituants $R^{ii}$ sont des méthyl,
- pour chaque motif T = $R^{ii}SiO_{3/2}$, $R^{ii}$ est un propyl,
- pour chaque motif D = $R^{ii}_2SiO_{2/2}$, les deux substituants $R^{ii}$ sont des méthyl,
- $\beta$ vaut au plus 0,50,
- $\gamma$ vaut au moins 0,40,
- $\varepsilon$ est compris entre 0,3 et 0,6.

**7.** Procédé selon l'une quelconque des revendications précédentes, **caractérisé en ce que** le polyorganosiloxane (b) est en solution dans une phase liquide.

**8.** Procédé selon la revendication 7, **caractérisé en ce que** la phase liquide comprend un solvant organique choisi parmi les solvants des polymères silicones tels que le D4 (octaméthylcyclotétrasiloxane) ou d'autres siloxanes volatils, le white spirit, les alcools en $C_1$-$C_8$, les hydrocarbures aliphatiques ou aromatiques.

**9.** Procédé selon la revendication 7 ou 8, **caractérisé en ce que** la phase liquide comprend un catalyseur de réticulation.

**10.** Procédé selon la revendication 9, **caractérisé en ce que** le catalyseur de réticulation est choisi parmi les composés organiques du titane ou de l'étain, notamment les titanates d'alkyle et le dicarboxylate de dialkyl-étain.

**11.** Procédé selon l'une quelconque des revendications précédentes, **caractérisé en ce que** le polyorganosiloxane (b) se présente sous la forme d'une émulsion en phase aqueuse.

**12.** Procédé selon la revendication précédente, **caractérisé en ce que** l'émulsion en phase aqueuse comprend :

- un polyorganosiloxane (b) de formule (II) ou (III),
- le produit (Z) de la réaction entre :
  - (Za) au moins de l'ammoniac et/ou une amine aromatique et/ou aliphatique polyfonctionnelles soluble dans l'eau contenant de 2 à 25 atomes de carbone,
  - (Zb) au moins un acide ou anhydride carboxylique contenant de 3 à 22 atomes,
- et au moins un tensioactif (Y) choisi parmi les classes suivantes :

(Ya) les agents tensioactifs non-ioniques choisis parmi :

(i) les alkylphénols polyoxyalkylénés dont le substituant alkyle est en $C_6$-$C_{12}$ et contenant de 5 à 25 motifs oxyalkylènes ;
(ii) les alcools aliphatiques en $C_8$-$C_{22}$ polyoxyalkylénés contenant de 1 à 25 motifs oxyalkylènes ;
(iii) les hydrocarbures terpéniques alcoxylés tels que les $\alpha$- ou $\beta$- pinènes éthoxylés et/ou propoxylés, contenant de 1 à 30 motifs oxyéthylène et/ou oxypropylène ;
(iv) les produits résultant de la condensation de l'oxyde d'éthylène ou de l'oxyde de propyiène avec le propylène glycol, l'éthylène glycol, de masse moléculaire en poids de l'ordre de 2000 à 10000 ;
(v) les produits résultant de la condensation de l'oxyde d'éthylène ou de l'oxyde de propylène avec l'éthylènediamine ;
(vi) les acides gras éthoxylés et/ou propoxylés en $C_8$-$C_{18}$ contenant de 5 à 25 motifs éthoxylés et/ou propoxylés ;
(vii) les amides gras éthoxylés contenant de 5 à 30 motifs ;
(viii) les amines éthoxylées contenant de 5 à 30 motifs éthoxylés ;
(ix) les amidoamines alcoxylées contenant de 1 à 50, de préférence de 1 à 25, tout particulièrement de 2 à 20 motifs oxyalkylène, de préférence oxyéthylène de préférence ;
(x) les tristyrylphénols éthoxylés ;

(Yb) les agents tensio-actifs anioniques choisis parmi :

(i) les alkylesters sulfonates de formule R-CH($SO_3$M)-COOR', où R représente un radical alkyle en $C_8$-$C_{20}$, de préférence en $C_{10}$-$C_{16}$, R' représente un radical alkyle en $C_1$-$C_6$, de préférence en $C_1$-$C_3$ et M est un cation alcalin (sodium, potassium, lithium), un ammonium substitué ou non substitué (méthyl-, diméthyl-, triméthyl-, tetraméthylammonium, diméthylpiperidinium) ou un dérivé d'une alcanolamine (monoéthanolamine, diéthanolamine, triéthanolamine). On peut citer tout particulièrement les méthyl ester sulfonates dont le radical R est en $C_{14}$-$C_{16}$;
(ii) les alkylsulfates de formule $ROSO_3M$, où R représente un radical alkyle ou hydroxyalkyle en $C_5$-$C_{24}$, de préférence en $C_{10}$-$C_{18}$, M représente un atome d'hydrogène ou est de même définition qu'au paragraphe Ya(i),
(iii) les dérivés éthoxylénés (OE) et/ou propoxylénés (OP) des alkylsulfates définis au paragraphe e (ii), présentant en moyenne de 0,5 à 30 motifs, de préférence de 0,5 à 10 motifs OE et/ou OP ;
(iv) les alkylamides sulfatés de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un radical tel que défini au paragraphe Ya(i) ou un atome d'hydrogène,
(v) les dérivés éthoxylénés (OE) et/ou propoxylénés (OP) des alkylamides sulfatés définis au paragraphe e(iv), présentant en moyenne de 0,5 à 60 motifs OE et/ou OP ;
(vi) les sels d'acides gras saturés ou insaturés en $C_8$-$C_{24}$, de préférence en $C_{14}$-$C_{20}$, les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates ; le cation étant un métal alcalin (sodium, potassium, lithium), un reste ammonium substitué ou non substitué (méthyl-, diméthyl-, triméthyl-, tetraméthylammonium, diméthylpiperidinium) ou dérivé d'une alcanolamine (monoéthanolamine, diéthanolamine, triéthanotamine),

(Yc) les agents tensio-actifs amphotères et zwitterioniques choisis parmi :

(i) les alkyldiméthylbétaïnes, les alkylamidopropyldiméthylbétaïnes, les alkyltriméthylsulfobétaïnes, les produits de condensation d'acides gras et d'hydrolysats de protéines.
(ii) les alkylamphoacétates ou alkylamphodiacétates dont le groupe alkyle contient de 6 à 20 atomes de carbone.
(iii) les phosphoaminolipides tels la lécithine.

**13.** Procédé selon la revendication précédente, **caractérisé en ce que** le polyorganosiloxane (b) est de formule (III) et :

- pour chaque motif M = $R^{ii}{}_3SiO_{1/2}$, les trois substituants $R^{ii}$ sont des méthyl,
- pour chaque motif T = $R^{ii}SiO_{3/2}$, $R^{ii}$ est un propyl,
- pour chaque motif D = $R^{ii}{}_2SiO_{2/2}$, les deux substituants $R^{ii}$ sont des méthyl,
- $\beta$ vaut au plus 0,50,
- $\gamma$ vaut au moins 0,40,
- $\varepsilon$ est compris entre 0,3 et 0,6.

**14.** Procédé selon l'une des revendications précédentes dans lequel le composé du silicone comprend en mélange le polyorganosiloxane (b) et un silane ou oligomères de silane (c) de formule (IV) :

$$(R')_u\ SiX_{(4-u)} \qquad (IV)$$

dans laquelle :

- le poids moléculaire du silane est inférieure à 700 g
- R', identiques ou différents, sont des radicaux organiques monovalents, notamment alkyle ou alkényle linéaire ou ramifié en $C_1$ à $C_{30}$ éventuellement substitués par un groupement halogène (F, Cl, Br), un groupement époxydé, un groupement aminé,
- u est égal à 0, 1 ou 2,
- X, identiques ou différents, sont des groupes condensables et/ou hydrolysables organiques et représentent :

  . un groupe OH ;
  . un groupe alcoxy ou alcényloxy contenant de 1 à 10 atomes de carbone (méthoxy, éthoxy, n-propoxy, isopropoxy) ;
  . un groupe aryloxy contenant de 6 à 13 atomes de carbone ;
  . un groupe cétiminoxy contenant de 1 à 8 atomes de carbone ;
  . un groupe aminofonctionnel ou amidofonctionnel contenant de 1 à 6 atomes de carbone, liés au silicium par une liaison Si-N.

**15.** Procédé selon la revendication 1 **caractérisé en ce que** le siliconate (a) de formule (I) est un méthyisiliconate de potassium ou de sodium.

**Patentansprüche**

**1.** Verfahren zur Behandlung der Oberfläche eines Substrates, **dadurch gekennzeichnet, daß** man die folgenden Stufen durchführt:

1) man behandelt das Substrat mit einer Dispersion von photokatalytischen Teilchen, anschließend
2) behandelt man das Substrat mit mindestens einer Silicon-Verbindung, ausgewählt unter:

⇒ (a) den Siliconaten der Formel (I)

$$R\text{-}Si\text{-}(OM)_m(OH)_{3-m} \quad (I)$$

in der

- R ein Kohlenwasserstoffrest mit 1 bis 18 Kohlenstoffatomen ist, gegebenenfalls substituiert durch ein Halogenatom, eine Gruppe Amino, Ether, Ester, Epoxy, Mercapto, Cyano oder (Poly)glycol,
- m eine ganze oder gebrochene Zahl zwischen 0,1 und 3 ist,
- M ein Alkalimetall, eine Gruppe Ammonium oder eine Gruppe Phosphonium darstellt,

und/oder den Kondensationsprodukten der genannten Siliconate,
⇒ (b) den Polyorganosiloxanen,

. entweder der mittleren Formel (II) : $M_\alpha D_\beta Q_\delta (O_{1/2}R^i)_\varepsilon$ in der

♦ $M = R^{ii}_3SiO_{1/2}$
$D = R^{ii}_2SiO_{2/2}$
$Q = SiO_{4/2}$ sind, mit
$R^{ii}$, gleich oder verschieden, das entweder einen linearen oder verzweigten Rest Alkyl mit 1 bis 8 Kohlenstoffatomen, oder eine substituierte oder nicht substituierte Gruppe Aryl mit 6 bis 12 Kohlenstoffatomen, oder eine Gruppe Aralkyl, Alkaryl, Aryloxyalkyl oder Alkoxyaryl darstellt, worin die Gruppe Aryl 6 bis 12 Kohlenstoffatome umfaßt, die gegebenenfalls substituiert sein können durch mindestens eine lineare oder verzweigte Gruppe Alkyl oder Alkoxy mit 1 bis 4 Kohlenstoffatomen, und worin die Gruppe Alkyl oder Alkoxy 1 bis 4 Kohlenstoffatome aufweist und linear oder verzweigt ist,
♦ $\alpha$, $\beta$ und $\delta$ jeweils molare Fraktionen der Siliciumatome der Struktureinheiten M, D und Q darstellen, mit $\alpha + \beta + \delta = 1$, und
$\alpha \leq 0{,}10$, vorzugsweise $\alpha \leq 0{,}010$,
$\beta \leq 0{,}85$,
$\delta \geq 0{,}10$,
♦ $R^i$, gleich oder verschieden, eine Gruppe Alkyl mit 1 bis 4 Kohlenstoffatomen bedeutet,
♦ $\varepsilon$, das die mittlere Anzahl von Struktureinheiten $O_{1/2}R^i$ pro Siliciumatom darstellt, zwischen 0,1 und 1,5 liegt,

. oder der mittleren Formel (III) : $M_\alpha D_\beta T_\gamma (O_{1/2}R^i)_\varepsilon$ in der

♦ M, D, $R^i$ und $\varepsilon$ die oben angegebene Bedeutung besitzen, $T = R^{ii}SiO_{3/2}$ ist, mit $R^{ii}$ der gleichen Bedeutung wie oben,
♦ $\alpha$, $\beta$ und $\gamma$ jeweils molare Fraktionen der Siliciumatome der Struktureinheiten M, D und T darstellen, mit $\alpha + \beta + \gamma = 1$, und
$\alpha \leq 0{,}20$, vorzugsweise $\alpha \leq 0{,}010$,
$\beta \leq 0{,}60$,
$\gamma \geq 0{,}30$.

2. Verfahren nach Anspruch 1, **dadurch gekennzeichnet, daß** die photokatalytischen Teilchen aus Titandioxid bestehen und eine Größe von höchstens 100 nm aufweisen.

3. Verfahren nach irgendeinem der Ansprüche 1 oder 2, **dadurch gekennzeichnet, daß** das Polyorganosiloxan (b) die Formel (II) oder (III) besitzt und $R^i$ eine Gruppe Ethyl oder Methyl ist.

4. Verfahren nach irgendeinem der vorstehenden Ansprüche, **dadurch gekennzeichnet, daß** das Polyorganosiloxan (b) die Formel (III) besitzt und daß

- bei jeder Struktureinheit $M = R^{ii}_3SiO_{1/2}$ die drei Substituenten $R^{ii}$ Methyl sind,
- bei jeder Struktureinheit $T = R^{ii}SiO_{3/2}$ $R^{ii}$ ein Methyl ist,
- bei jeder Struktureinheit $D = R^{ii}_2SiO_{2/2}$ ein Substituent $R^{ii}$ ein Methyl und der andere Substituent $R^{ii}$ ein Octyl ist,
- $\beta$ höchstens 0,10 beträgt,

- $\gamma$ mindestens 0,70 beträgt,
- $\varepsilon$ zwischen 0,2 und 1 beträgt.

**5.** Verfahren nach irgendeinem der vorstehenden Ansprüche, **dadurch gekennzeichnet, daß** das Polyorganosiloxan (b) die Formel (III) besitzt und daß

- bei jeder Struktureinheit M = $R^{ii}{}_3SiO_{1/2}$ die drei Substituenten $R^{ii}$ Methyl sind,
- bei jeder Struktureinheit T = $R^{ii}SiO_{3/2}$ $R^{ii}$ ein Methyl ist,
- bei jeder Struktureinheit D = $R^{ii}{}_2SiO_{2/2}$ die zwei Substituenten $R^{ii}$ Methyl sind,
- $\beta$ höchstens 0,30 beträgt,
- $\gamma$ mindestens 0,70 beträgt,
- $\varepsilon$ zwischen 0,2 und 1 beträgt.

**6.** Verfahren nach irgendeinem der vorstehenden Ansprüche, **dadurch gekennzeichnet, daß** das Polyorganosiloxan (b) die Formel (III) besitzt und daß

- bei jeder Struktureinheit M = $R^{ii}{}_3SiO_{1/2}$ die drei Substituenten $R^{ii}$ Methyl sind,
- bei jeder Struktureinheit T = $R^{ii}SiO_{3/2}$ $R^{ii}$ ein Propyl ist,
- bei jeder Struktureinheit D = $R^{ii}{}_2SiO_{2/2}$ die zwei Substituenten $R^{ii}$ Methyl sind,
- $\beta$ höchstens 0,50 beträgt,
- $\gamma$ mindestens 0,40 beträgt,
- $\varepsilon$ zwischen 0,3 und 0,6 beträgt.

**7.** Verfahren nach irgendeinem der vorstehenden Ansprüche, **dadurch gekennzeichnet, daß** das Polyorganosiloxan (b) in Lösung in einer flüssigen Phase vorliegt.

**8.** Verfahren nach Anspruch 7, **dadurch gekennzeichnet, daß** die flüssige Phase ein organisches Lösungsmittel umfaßt, ausgewählt unter den Lösungsmitteln für Siliconpolymere wie D4 (Octamethylcyclotetrasiloxan) oder andere flüchtige Siloxane, White Spirit (Testbenzin), Alkohole mit 1 bis 8 Kohlenstoffatomen, aliphatische oder aromatische Kohlenwasserstoffe.

**9.** Verfahren nach Anspruch 7 oder 8, **dadurch gekennzeichnet, daß** die flüssige Phase einen Vernetzungskatalysator umfaßt.

**10.** Verfahren nach Anspruch 9, **dadurch gekennzeichnet, daß** der Vernetzungskatalysator unter den organischen Verbindungen von Titan oder Zinn, insbesondere den Alkyltitanaten und den Dialkylzinn-dicarboxylaten ausgewählt wird.

**11.** Verfahren nach irgendeinem der vorstehenden Ansprüche, **dadurch gekennzeichnet, daß** das Polyorganosiloxan (b) in Form einer Emulsion in wäßriger Phase vorliegt.

**12.** Verfahren nach dem vorstehenden Anspruch, **dadurch gekennzeichnet, daß** die Emulsion in wäßriger Phase umfaßt:

- ♦ ein Polyorganosiloxan (b) der Formel (II) oder (III),
- ♦ das Produkt (Z) der Reaktion zwischen:
  - (Za) mindestens Ammoniak und/oder einem polyfunktionellen aromatischen und/oder aliphatischen Amin, das in Wasser löslich ist und 2 bis 25 Kohlenstoffatome enthält,
  - (Zb) mindestens einer Carbonsäure oder einem Carbonsäureanhydrid mit 3 bis 22 Kohlenstoffatomen,
- ♦ und mindestens ein oberflächenaktives Mittel (Y), gewählt aus den folgenden Klassen:

  (Ya) den nichtionischen oberflächenaktiven Mitteln, ausgewählt unter:

  - (i) den polyoxyalkylenierten Alkylphenolen, deren Substituent Alkyl 6 bis 12 Kohlenstoffatome umfaßt, und die 5 bis 25 oxyalkylenische Struktureinheiten enthalten;
  - (ii) den polyoxyalkylenierten aliphatischen Alkoholen mit 8 bis 22 Kohlenstoffatomen, die 1 bis 25

oxyalkylenische Struktureinheiten enthalten;

- (iii) den alkoxylierten terpenischen Kohlenwasserstoffen wie die ethoxylierten und/oder propoxylierten α- oder β-Pinene, die 1 bis 30 oxyethylenische und/oder oxypropylenische Struktureinheiten enthalten;
- (iv) den Produkten aus der Kondensation von Ethylenoxid oder Propylenoxid mit Propylenglycol, Ethylenglycol, mit einer Molekularmasse in Gewicht in der Größenordnung von 2000 bis 10000;
- (v) den Produkten aus der Kondensation von Ethylenoxid oder Propylenoxid mit Ethylendiamin;
- (vi) den ethoxylierten und/oder propoxylierten Fettsäuren mit 8 bis 18 Kohlenstoffatomen, die 5 bis 25 ethoxylierte und/oder propoxylierte Struktureinheiten enthalten;
- (vii) den ethoxylierten Fettamiden, die 5 bis 30 Struktureinheiten enthalten;
- (viii) den ethoxylierten Aminen, die 5 bis 30 ethoxylierte Struktureinheiten enthalten;
- (ix) den alkoxylierten Amidoaminen, die 1 bis 50, vorzugsweise 1 bis 25, ganz besonders 2 bis 20 oxyalkylenische, vorzugsweise oxyethylenische Struktureinheiten enthalten;
- (x) den ethoxylierten Tristyrylphenolen;

(Yb) den anionischen oberflächenaktiven Mitteln, ausgewählt unter:

- (i) den Alkylestersulfonaten der Formel $R-CH(SO_3M)-COOR'$, worin R einen Rest Alkyl mit 8 bis 20 Kohlenstoffatomen, vorzugsweise 10 bis 16 Kohlenstoffatomen darstellt, R' einen Rest Alkyl mit 1 bis 6, vorzugsweise 1 bis 3 Kohlenstoffatomen bedeutet und M ein Alkalikation (Natrium, Kalium, Lithium), substituiertes oder nicht substituiertes Ammonium (Methyl-, Dimethyl-, Trimethyl-, Tetramethylammonium, Dimethylpiperidinium) oder ein Derivat eines Alkanolamins (Monoethanolamin, Diethanolamin, Triethanolamin) ist; man kann ganz besonders die Methylestersulfonate nennen, bei denen der Rest R 14 bis 16 Kohlenstoffatome enthält;
- (ii) den Alkylsulfaten der Formel $ROSO_3M$, worin R einen Rest Alkyl oder Hydroxyalkyl mit 5 bis 24 Kohlenstoffatomen, vorzugsweise 10 bis 18 Kohlenstoffatomen darstellt, M ein Wasserstoffatom ist oder die gleiche Bedeutung wie oben in Punkt Ya(i) besitzt;
- (iii) den ethoxylenischen (OE) und/oder propoxylenischen (OP) Derivaten von Alkylsulfaten, definiert wie in Punkt (ii), mit im Mittel 0,5 bis 30 Struktureinheiten, vorzugsweise 0,5 bis 10 Struktureinheiten OE und/oder OP;
- (iv) den sulfatierten Alkylamiden der Formel $RCONHR'OSO_3M$, worin R einen Rest Alkyl mit 2 bis 22 Kohlenstoffatomen, vorzugsweise 6 bis 20 Kohlenstoffatomen darstellt, R' ein Rest Alkyl mit 2 bis 3 Kohlenstoffatomen ist und M einen wie oben in Punkt Ya(i) definierten Rest oder ein Wasserstoffatom bedeutet;
- (v) den ethoxylenischen (OE) und/oder propoxylenischen (OP) Derivaten von sulfatierten Alkylamiden, definiert wie in Punkt (iv), mit im Mittel 0,5 bis 60 Struktureinheiten OE und/oder OP;
- (vi) den Salzen von gesättigten oder ungesättigten Fettsäuren mit 8 bis 24, vorzugsweise 14 bis 20 Kohlenstoffatomen. den Alkylbenzolsulfonaten mit 9 bis 20 Kohlenstoffatomen, den primären oder sekundären Alkylsulfonaten mit 8 bis 22 Kohlenstoffatomen, den Alkylglycerinsulfonaten, den sulfonierten Polycarbonsäuren, beschrieben in GB-A-1 082 179, den Paraffinsulfonaten, den N-Acyl-N-alkyltauraten, den Alkylphosphaten, den Isethionaten, den Alkylsuccinamaten, den Alkylsulfosuccinaten, den Monoestern oder Diestern von Sulfosuccinaten, den N-Acyl-sarcosinaten, den Sulfaten von Alkylglycosiden, den Polyethoxycarboxylaten; wobei das Kation ein Alkalimetall (Natrium, Kalium, Lithium), ein substituierter oder nicht substituierter Rest Ammonium (Methyl-, Dimethyl-, Trimethyl-, Tetramethylammonium, Dimethylpiperidinium) oder ein Derivat eines Alkanolamins (Monoethanolamin, Diethanolamin, Triethanolamin) ist;

(Yc) den amphoteren oder zwitterionischen oberflächenaktiven Mitteln, ausgewählt unter

- (i) den Alkyldimethylbetainen, den Alkylamidopropyldimethylbetainen, den Alkyltrimethylsulfobetainen, den Produkten der Kondensation von Fettsäuren und Protein-Hydrolysaten,
- (ii) den Alkylamphoacetaten oder Alkylamphodiacetaten, bei denen die Gruppe Alkyl 6 bis 20 Kohlenstoffatome enthält;
- (iii) den Phosphoaminolipiden wie Lecithin.

**13.** Verfahren nach dem vorstehenden Anspruch, **dadurch gekennzeichnet, daß** das Polyorganosiloxan (b) die Formel (III) besitzt und daß

- bei jeder Struktureinheit M = $R^{ii}{}_3SiO_{1/2}$ die drei Substituenten $R^{ii}$ Methyl sind,
- bei jeder Struktureinheit T = $R^{ii}SiO_{3/2}$ $R^{ii}$ ein Propyl ist,
- bei jeder Struktureinheit D = $R^{ii}{}_2SiO_{2/2}$ die zwei Substituenten $R^{ii}$ Methyl sind,
- $\beta$ höchstens 0,50 beträgt,
- $\gamma$ mindestens 0,40 beträgt,
- $\varepsilon$ zwischen 0,3 und 0,6 beträgt.

**14.** Verfahren nach einem der vorstehenden Ansprüche, bei dem die Silicon-Verbindung in Mischung das Polyorganosiloxan (b) und ein Silan oder Silan-Oligomer (c) der Formel (IV)

$$(R')_u SiX_{(4-u)} \qquad (IV)$$

umfaßt, in der

- das Molekulargewicht des Silans unter 700 g liegt,
- R', gleich oder verschieden, monovalente organische Reste darstellen, insbesondere lineares oder verzweigtes Alkyl oder Alkenyl mit 1 bis 30 Kohlenstoffatomen, gegebenenfalls substituiert durch eine Gruppe Halogen (F, Cl, Br), eine Gruppe Epoxid, eine aminierte Gruppe,
- u gleich 0, 1 oder 2 ist,
- X, gleich oder verschieden, organische kondensierbare und/oder hydrolysierbare Gruppen darstellt und bedeutet:

  . eine Gruppe OH;
  . eine Gruppe Alkoxy oder Alkenyloxy mit 1 bis 10 Kohlenstoffatomen (Methoxy, Ethoxy, n-Propoxy, Isopropoxy);
  . eine Gruppe Aryloxy mit 6 bis 13 Kohlenstoffatomen;
  . eine Gruppe Ketiminoxy mit 1 bis 8 Kohlenstoffatomen;
  . eine aminofunktionelle oder amidofunktionelle Gruppe mit 1 bis 6 Kohlenstoffatomen, gebunden an das Silicium durch eine Bindung Si-N.

**15.** Verfahren nach Anspruch 1, **dadurch gekennzeichnet, daß** das Siliconat (a) der Formel (I) ein Methylsiliconat von Kalium oder Natrium ist.

## Claims

**1.** Method for treating the surface of a substrate, **characterized in that** the following steps are used:

1. the substrate is treated with a dispersion of photocatalytic particles, and then
2. the substrate is treated with at least one silicone compound chosen from:

⇒ (a) the siliconates of formula (I):

$$R\text{-}Si(OM)_m(OH)_{3-m} \qquad (I)$$

in which:

- R is a hydrocarbon residue of 1 to 18 carbon atoms, optionally substituted with a halogen atom, an amino, ether, ester, epoxy, mercapto, cyano or (poly)glycol group,
- m is an integer or a fractional number between 0.1 and 3,
- M is an alkaline metal, an ammonium group or a phosphonium group,

and/or the products of condensation of the said siliconates,

⇒ (b) polyorganosiloxanes

. either having the average formula (II) :

$$M_\alpha D_\beta Q_\delta (O_{1/2})R^i)_\varepsilon,$$

in which:

- $M = R^{ii}_3SiO_{1/2}$
  $D = R^{ii}_2SiO_{2/2}$
  $Q = SiO_{4/2}$

with $R^{ii}$ which may be identical or different, representing either a linear or branched alkyl radical having from 1 to 8 carbon atoms, or a substituted or unsubstituted aryl group having from 6 to 12 carbon atoms, or an aralkyl, alkaryl, aryloxyalkyl or alkoxyaryl group in which the aryl group comprises from 6 to 12 carbon atoms which may be optionally substituted by at least one linear or branched alkyl or alkoxy group having from 1 to 4 carbon atoms, and in which the alkyl or alkoxy group has from 1 to 4 carbon atoms and is linear or branched.

- $\alpha$, $\beta$ and $\delta$ represent respectively the molar fractions of the silicon atoms of the units M, D and Q, with $\alpha + \beta + \delta = 1$, and:

  $\alpha \leq 0.10$, preferably $\alpha \leq 0.010$,
  $\beta \leq 0.85$,
  $\delta \geq 0.10$,

- $R^i$, which may be identical or different, represent an alkyl group having from 1 to 4 carbon atoms,
- $\varepsilon$ representing the average number of units $O_{1/2}R^i$ per silicon atom is between 0.1 and 1.5,

or having the average formula (III):

$$M_\alpha D_\beta T_\gamma (O_{1/2})R^i)_\varepsilon,$$

in which:

- M, D, $R^i$ and $\varepsilon$ have the meaning above, $T = R^{ii}SiO_{3/2}$, with $R^{ii}$ having the same meaning as above,
- $\alpha$, $\beta$ and $\gamma$ represent respectively the molar fractions of the silicon atoms of the units M, D and T, with $\alpha + \beta + \gamma = 1$, and:

  $\alpha \leq 0.20$, preferably $\alpha \leq 0.010$,
  $\beta \leq 0.60$.
  $\gamma \geq 0.30$.

**2.** Method according to claim 1, **characterized in that** the photocatalytic particles are particles of titanium dioxide having a size of at most 100 nm.

**3.** Method according to either of claims 1 and 2, **characterized in that** the polyorganosiloxane (b) is of formula (II) or (III) and $R^i$ is an ethyl or methyl group.

**4.** Method according to any one of the preceding claims, **characterized in that** the polyorganosiloxane (b) is of formula (III) and:

- for each unit $M = R^{ii}_3SiO_{1/2}$, the three substituents $R^{ii}$ are methyls,
- for each unit $T = R^{ii}SiO_{3/2}$, $R^{ii}$ is a methyl,
- for each unit $D = R^{ii}_2SiO_{2/2}$, a substituent $R^{ii}$ is a methyl and the other substituent $R^{ii}$ is an octyl,
- $\beta$ equals at most 0.10,
- $\gamma$ equals at least 0.70,
- $\varepsilon$ is between 0.2 and 1.

5. Method according to any one of the preceding claims, **characterized in that** the polyorganosiloxane (b) is of formula (III), and:

- for each unit M = $R^{ii}{}_3SiO_{1/2}$, the three substituents $R^{ii}$ are methyls,
- for each unit T = $R^{ii}SiO_{3/2}$, $R^{ii}$ is a methyl,
- for each unit D = $R^{ii}{}_2SiO_{2/2}$, the two substituents $R^{ii}$ are methyls,
- $\beta$ equals at most 0.30,
- $\gamma$ equals at least 0.70,
- $\varepsilon$ is between 0.2 and 1.

6. Method according to any one of the preceding claims, **characterized in that** the polyorganosiloxane (b) is of formula (III), and:

- for each unit M = $R^{ii}{}_3SiO_{1/2}$, the three substituents $R^{ii}$ are methyls,
- for each unit T = $R^{ii}SiO_{3/2}$, $R^{ii}$ is a propyl,
- for each unit D = $R^{ii}{}_2SiO_{2/2}$, the two substituents $R^{ii}$ are methyls,
- $\beta$ equals at most 0.50,
- $\gamma$ equals at least 0.40,
- $\varepsilon$ is between 0.3 and 0.6.

7. Method according to any one of the preceding claims, **characterized in that** the polyorganosiloxane (b) is in solution in a liquid phase.

8. Method according to claim 7, **characterized in that** the liquid phase comprises an organic solvent chosen from the solvents for silicone polymers such as D4 (octamethylcyclotetrasiloxane) or other volatile siloxanes, white spirit, $C_1$-$C_8$ alcohols, aliphatic or aromatic hydrocarbons.

9. Method according to claim 7 or 8, **characterized in that** the liquid phase comprises a crosslinking catalyst.

10. Method according to claim 9, **characterized in that** the crosslinking catalyst is chosen from organic compounds of titanium or tin, in particular alkyl titanates and dialkyltin dicarboxylate.

11. Method according to any one of the preceding claims, **characterized in that** the polyorganosiloxane (b) is provided in the form of an emulsion in an aqueous phase.

12. Method according to the preceding claim, **characterized in that** the emulsion in an aqueous phase comprises:

- a polyorganosiloxane (b) of formula (II) or (III),
- the product (Z) of the reaction between:
  - (Za) at least ammonia and/or a water-soluble polyfunctional aromatic and/or aliphatic amine containing from 2 to 25 carbon atoms,
  - (Zb) at least one carboxylic acid or anhydride containing from 3 to 22 atoms,
- and at least one surfactant (Y) chosen from the following classes:

  (Ya) the nonionic surfactants chosen from:

  (i) polyoxyalkylenated alkylphenols in which the alkyl substituent is $C_6$-$C_{12}$ and containing from 5 to 25 oxyalkylene units;
  (ii) the polyoxyalkylenated $C_8$-$C_{22}$ aliphatic alcohols containing from 1 to 25 oxyalkylenated units;
  (iii) the alkoxylated terpene hydrocarbons such as ethoxylated and/or propoxylated $\alpha$-or $\beta$-pinenes containing from 1 to 30 oxyethylene and/or oxypropylene units;
  (iv) the products resulting from the condensation of ethylene oxide or of propylene oxide with propylene glycol, ethylene glycol, having a weight-average molecular mass of the order of 2 000 to 10 000;
  (v) the products resulting from the condensation of ethylene oxide or of propylene oxide with ethylenediamine;
  (vi) the ethoxylated and/or propoxylated $C_8$-$C_{18}$ fatty acids containing from 5 to 25 ethoxylated and/or propoxylated units;
(vii) the ethoxylated fatty amides containing from 5 to 30 units;
(viii) the ethoxylated amines containing from 5 to 30 ethoxylated units;
(ix) the alkoxylated amidoamines containing from 1 to 50, preferably from 1 to 25, most particularly from 2 to 20 oxyalkylene, preferably oxyethylene, units;
(x) ethoxylated tristyrylphenols;

(Yb) the anionic surfactants chosen from:

(i)alkyl ester sulphonates of formula R-CH($SO_3$M)-COOR', where R represents a $C_8$-$C_{20}$, preferably $C_{10}$-$C_{16}$, alkyl radical, R' represents a $C_1$-$C_6$, preferably $C_1$-$C_3$, alkyl radical and M is an alkali metal cation (sodium, potassium, lithium), a substituted or unsubstituted ammonium (methyl-, dimethyl-, trimethyl-, tetramethylammonium, dimethylpiperidinium) or a derivative of an alkanolamine (monoethanolamine, diethanolamine, triethanolamine). There may be mentioned most particularly the methyl ester sulphonates whose radical R is $C_{14}$-$C_{16}$;
(ii) the alkyl sulphates of formula $ROSO_3M$, where R represents a $C_5$-$C_{24}$, preferably $C_{10}$-$C_{18}$, alkyl or hydroxyalkyl radical, M represents a hydrogen atom or has the same definition as in paragraph Ya(i),
(iii) the ethoxylenated (EO) and/or propoxylenated (PO) derivatives of the alkyl sulphates defined in paragraph e(ii), having on average from 0.5 to 30 units, preferably from 0.5 to 10 EO and/or PO units;
(iv) alkylamide sulphates of formula $RCONHR'OSO_3M$ where R represents a $C_2$-$C_{22}$, preferably $C_6$-$C_{20}$, alkyl radical, R' a $C_2$-$C_3$ alkyl radical, M representing a radical as defined in paragraph Ya(i) or a hydrogen atom,
(v) the ethoxylenated (EO) and/or propoxylenated (PO) derivatives of the alkylamide sulphates defined in paragraph e(iv) having on average from 0.5 to 60 EO and/or PO units;
(vi) $C_8$-$C_{24}$, preferably $C_{14}$-$C_{20}$, saturated or unsaturated fatty acid salts, $C_9$-$C_{20}$ alkylbenzenesulphonates, $C_8$-$C_{22}$ primary or secondary alkyl sulphonates, alkylglyceryl sulphonates, the sulphonated polycarboxylic acids described in GB-A-1 082 179, paraffinsulphonates, N-acyl N-alkyltaurates, alkyl phosphates, isethionates, alkyl succinamates, alkyl sulphosuccinates, monoesters or diesters of sulphosuccinates, N-acyl sarcosinates, alkylglycoside sulphates, polyethoxycarboxylates; the cation being an alkali metal (sodium, potassium, lithium), a substituted or unsubstituted ammonium residue (methyl-, dimethyl-, trimethyl-, tetramethylammonium, dimethylpiperidinium) or an alkanolamine (monoethanolamine, diethanolamine, triethanolamine) derivative,

(Yc) the amphoteric and zwitterionic surfactants chosen from:

(i) alkyldimethylbetaines, alkylamidopropyldimethylbetaines, alkyltrimethylsulphobetaines, the products of condensation of fatty acids and of protein hydrolysates,
(ii) alkylamphoacetates or alkylamphodiacetates whose alkyl group contains from 6 to 20 carbon atoms,
(iii) phosphoaminolipids such as lecithin.

**13.** Method according to the preceding claim, **characterized in that** the polyorganosiloxane (b) is of formula (III), and:

- for each unit M = $R^{ii}_3SiO_{1/2}$, the three substituents $R^{ii}$ are methyls,
- for each unit T = $R^{ii}SiO_{3/2}$, $R^{ii}$ is a propyl,
- for each unit D = $R^{ii}_2SiO_{2/2}$, the two substituents $R^{ii}$ are methyls,
- $\beta$ equals at most 0.50,
- $\gamma$ equals at least 0.40,
- $\varepsilon$ is between 0.3 and 0.6.

**14.** Method according to one of the preceding claims, in which the silicone compound comprises, in the form of a mixture, polyorganosiloxane (b) and a silane or oligomers of silane (c) of formula (IV):

$$(R')_u SiX_{(4-u)} \qquad \text{(IV)}$$

in which:

- the molecular weight of the silane is less than 700 g,
- R', which may be identical or different, are monovalent organic radicals, in particular $C_1$ to $C_{30}$ linear or branched alkyl or alkenyl optionally substituted with a halogen group (F, Cl, Br), an epoxidized group or an amine group,
- u is equal to 0, 1 or 2,
- X, which may be identical or different, are condensable and/or hydrolysable organic groups and represent:

  . an OH group;
  . an alkoxy or alkenyloxy group containing from 1 to 10 carbon atoms (methoxy, ethoxy, n-propoxy, isopropoxy);
  . an aryloxy group containing from 6 to 13 carbon atoms;
  . a cetiminoxy group containing from 1 to 8 carbon atoms;
  . an aminofunctional or amidofunctional group containing from 1 to 6 carbon atoms, linked to the silicon by an Si-N bond.

**15.** Method according to claim 1, **characterized in that** the siliconate (a) of formula (I) is a potassium or sodium methylsiliconate.